# EUROPEAN PATENT APPLICATION

(11) **EP 2 605 376 A2**
(43) Date of publication of application: **19.06.2013**
(21) Application number: 12196444.9
(22) Date of filing: 11.12.2012
(51) Int. Cl.: H02K 3/34, H02K 11/00

(54) **Electric machine including insulated slot liner with temperature sensor**

(30) Priority: 16.12.2011 US 201113328190
(71) Applicant: Remy Technologies, L.l.c., Pendleton, IN 46064 (US)
(72) Inventor: Wan, Koon Hoong, Indianapolis, IN 46236 (US); Hamer, Colin, Noblesville, IN 46060 (US)
(74) Representative: Rentsch Partner AG

(57) **Abstract**

A slot liner is configured for insertion into a slot of a core of an electric machine having a winding arrangement comprised of a plurality of conductors. The slot liner comprises a first insulation layer forming a cavity configured to receive at least one of the plurality of conductors of the winding arrangement. The slot liner also comprises a second insulation layer coupled to the first insulation layer. In addition, the slot liner includes a length of conductive material positioned between the first insulation layer and the second insulation layer. The length of conductive material has a resistance that varies with temperature. A first lead extends from a first end of the length of conductive material and a second lead extends from the second end of the length of conductive material.

## Description

### FIELD

This application relates to the field of electric machines, and particularly to electric machine conductors positioned in a core member.

### BACKGROUND

It is often desirable to continuously monitor the operating temperature of an electric motor to prevent overheating or other undesirable conditions. Accordingly, temperature sensor arrangements have been embedded inside of the electric motor to provide an indication of the operating temperature. In some temperature sensing arrangements, the temperature sensor is closely associated with the actual windings of the electric machine to provide an indication of operating temperature.

Many electric machines are comprised of core portions including a plurality of slots with windings positioned within the slots to form a winding arrangement on then core. Segmented windings are commonly used in modern electrical machine applications, such as in hybrid-electric vehicles. These windings typically comprise a plurality of segmented conductors which include in-slot portions and ends that are connected together. The conductors are positioned in the slots of a laminated core portion of the electric machine (e.g. stator slots), and the ends of the conductors are connected to form windings for the electric machine.

Segmented conductors for electric machines are often provided in the form of U-shaped conductors which include two straight legs and a central U-turn portion extending between the legs. The terms "U-shaped conductor" and "U-turn portion" as used herein refer to electric conductors or conductor portions where the axial direction of the conductor changes by more than 90°, such as by about 180°. However, these terms are not limited to conductors or conductor portions that form a perfect "U" shape. Additionally, the term "conductors" or "segmented conductors" as used herein may refer to conductors with a U-turn portion, but may also refer to conductors that do not have a U-turn portion. Segmented conductors are typically positioned in the slots of the core such that the bend portions (i.e., the U-turn portions) are positioned on one side of the core (i.e., the "insertion side" or "insertion end") and the leg ends extend from the opposite side of the core (i.e., the "connection side", "connection end" or "weld end"). In such electric machines with segmented conductors, the hottest operating temperature of the electric machine tends to be within the slots of the core where the conductors are located.

Accordingly, it would be advantageous to provide a temperature sensing arrangement for electric machines with segmented conductors that provides an accurate and reliable indication of electric machine operating temperature. It would be advantageous if such temperature sensing arrangement could be easily assembled on the electric machine. It would also be advantageous if such temperature sensor arrangement could be provided on the electric machine without increasing the size of the electric machine or interfering with the arrangement of components of the electric machine. It would be also advantageous if such temperature sensor arrangement could be provided easily and at relatively low cost to the manufacturer.

### SUMMARY

In accordance with one embodiment of the disclosure, there is provided an electric machine comprising a core comprising a plurality of slots. A plurality of conductors are positioned in the plurality of slots and at least one slot liner is positioned in one of the plurality of slots. The electric machine further comprises a temperature sensor provided on the slot liner.

In accordance with another embodiment of the disclosure, there is provided a slot liner for insertion into a slot of a core of an electric machine, the electric machine including a winding arrangement having a plurality of conductors. The slot liner comprises a first insulation layer forming a cavity configured to receive at least one of the plurality of conductors of the winding arrangement. The slot liner also comprises a second insulation layer coupled to the first insulation layer. In addition, the slot liner includes a length of conductive material positioned between the first insulation layer and the second insulation layer. The length of conductive material has a resistance that varies with temperature. A first lead extends from a first end of the length of conductive material and a second lead extends from the second end of the length of conductive material.

In yet another embodiment of the disclosure, a slot liner is used in association with a method of monitoring a temperature of an electric machine with a winding arrangement in a vehicle. The method comprises inserting a slot liner into a slot of a core of the electric machine, the slot liner including a temperature sensor provided on the slot liner such that the temperature sensor is at least partially positioned within the slot. The method also comprises inserting at least one conductor of the winding arrangement into the slot liner. The temperature sensor in the slot is coupled to a vehicle controller. The method further comprises determining a temperature inside the electric machine based on an electrical signal from the temperature sensor.

The above described features and advantages, as well as others, will become more readily apparent to those of ordinary skill in the art by reference to the following detailed description and accompanying drawings. While it would be desirable to provide a slot liner system for an electric machine that provides one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

FIG. 1 shows an elevational view of an exemplary embodiment of an electric machine including a winding arrangement associated with an insulated slot liner with temperature sensor;

FIG. 2 shows a cross-sectional view of a stator core of the electric machine along line II-II of FIG. 1, with the winding arrangement not included on the stator core;

FIG. 3 shows a cross-sectional view of a slot of the stator core of FIG. 2, with slot liners and segmented conductors of the winding arrangement positioned in the slot;

FIG. 4 shows a perspective view of one of the segmented conductors of FIG. 3;

FIG. 5 shows a perspective view of one of the slot liners of FIG. 3;

FIG. 6 shows a plan view of a substrate member of one of the slot liners of FIG. 3, with a temperature sensor positioned on the substrate member;

FIG. 7 shows a stretched perspective view of the slot liner of FIG. 6, illustrating the spiral wound arrangement of the substrate member;

FIG. 8 shows a cutaway view of a slot of the stator core of FIG. 3 including the slot liner with temperature sensor; and

FIG. 9 shows a block diagram of a vehicle with an electric machine including the slot liner of FIG. 7.

### DESCRIPTION

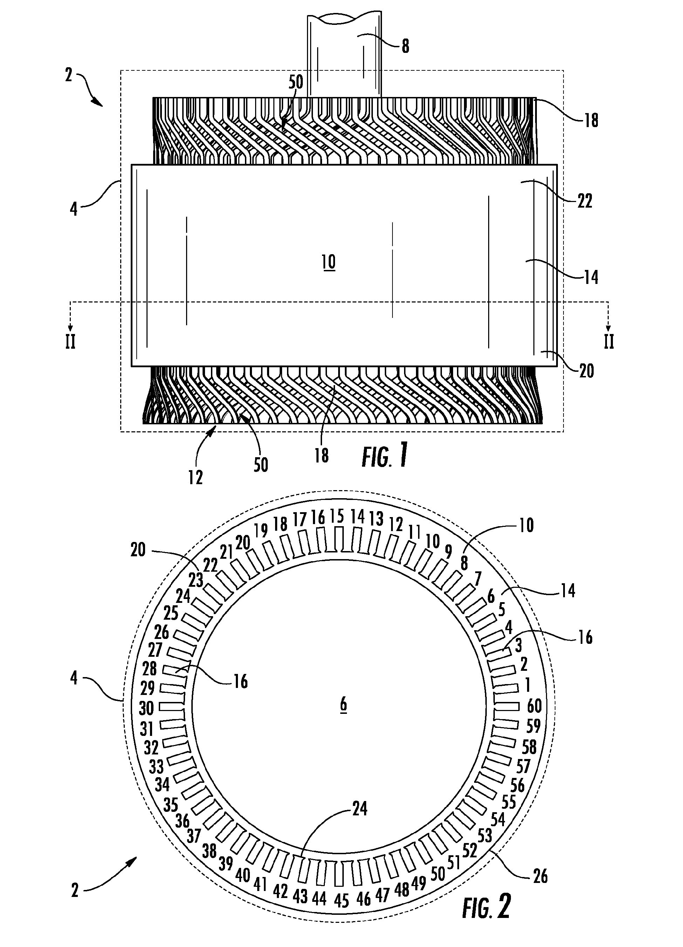

With reference to FIGs. 1 and 2, an exemplary embodiment of an electric machine 2 is shown. The electric machine 2 includes a rotor 6 and a stator 10 retained within an electric machine housing 4 (illustrated with dotted lines). The stator 10 includes a winding arrangement 12 comprised of a plurality of segmented conductors 18 positioned on a stator core 14. The segmented conductors 18 extend through slot liners 30 positioned in slots 16 of the stator core 14, with each of the slot liners 30 configured to receive one of the segmented conductors 18. As explained in further detail below, a temperature sensor 50 is provided on at least one of the slot liners 30. The temperature sensor may be provided on the slot liner in any of numerous fashions, including embedded in, integrated with, fastened on, connected to, or otherwise provided on the slot liner.

The electric machine housing 4 is configured to substantially or completely enclose the rotor 6 and stator 10 and prevent contamination from entering the space within the housing 4. The housing 4 is typically comprised of a metal material, such as steel. The housing 4 includes bearings that support rotational movement of an output shaft 8.

The output shaft 8 extends through the housing 4 and is coupled to the rotor 6. The rotor 6 includes a core member that is configured to rotate within the housing 4. The rotor 6 may be any one of various different rotor types as will be recognized by those of ordinary skill in the art, such as a permanent magnet rotor, a claw-pole rotor, a squirrel cage rotor, or any of various other rotor types. The rotor 6 is physically separated from the stator 10 by an air gap. However, the rotor 6 is magnetically coupled to the stator 10 via the stator windings 12 which are retained on the stator core 14.

The stator core 14 is comprised of a stack of thin sheets of ferromagnetic material, such as sheets of steel material. Thus, the stator core 14 is commonly referred to as a "lamination stack". The stator core 14 includes a substantially cylindrical wall with an inner circumferential perimeter 24 and an outer circumferential perimeter 26, as shown in FIG. 2. A plurality of slots 16 are formed in the substantially cylindrical wall. The slots 16 extend the entire axial length of the stator core 14. Additionally, each slot 16 is partially closed on the inner circumferential perimeter and extends radially inward from the inner circumferential perimeter.

The segmented conductors 18 are positioned in the slots 16 of the stator core 14 and extend axially through the slots 16. The segmented conductors 18 define (i) an insertion side 20 (which may also be referred to herein as the "insertion end") of the stator 10, and (ii) a connection side 22 (which may also be referred to herein as a "connection end" or a "weld end") of the stator 10. As these terms suggest, the segmented conductors 18 are inserted into the slots 16 of the stator core 14 from the insertion side 20 of the stator 10. Similarly, the segmented conductors 18 are welded or otherwise connected together on the connection side 22 of the stator 10.

FIG. 2 shows a top view of the insertion side 20 of the exemplary stator core 14 of FIG. 1 without the conductors 18 of the winding arrangement 12 placed in the stator slots 16. The exemplary stator core 14 of FIG. 2 includes sixty slots 16. In other embodiments, the stator core 14 may include more slots or fewer slots. Openings to the stator slots 16 are provided through the inner perimeter 24 as well as the insertion side 20 and weld side 22 of the stator.

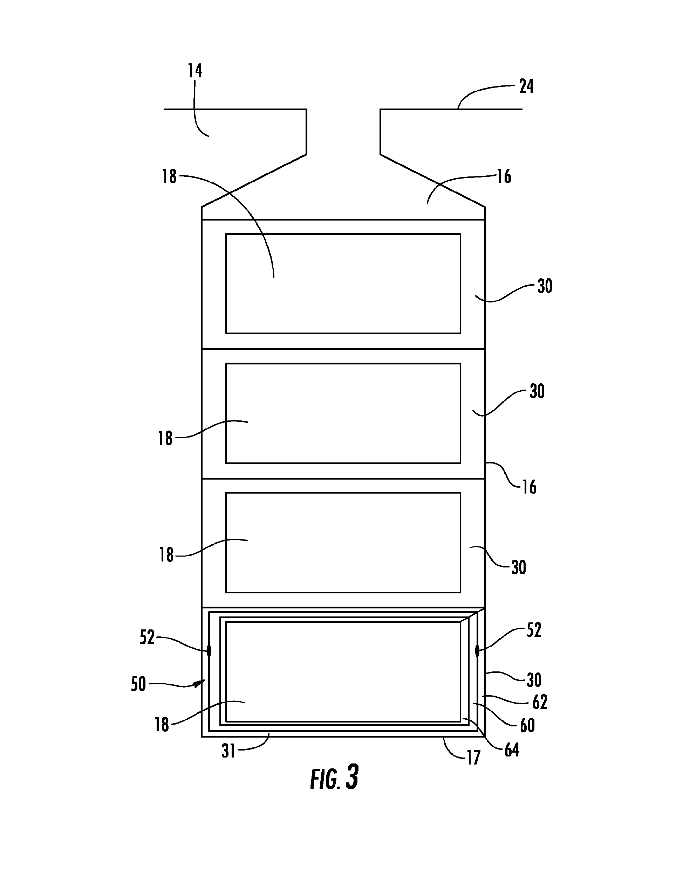

FIG. 3 shows an enlarged cross-sectional view of one of the slots 16 of the stator 10 with the segmented conductors 18 placed in the slot. In the exemplary embodiment of FIG. 3, the segmented conductors 18 have a rectangular cross-section and four conductors 18 are placed in each slot 16 of the electric machine. In other embodiments, the conductors 18 may have a different shape and more or less conductors may be placed in each slot 16. Each conductor 18 is separated from neighboring conductors in the slot 16 by insulation layers which may include the slot liners 30. The slot liners 30 are also arranged and configured in the slots 16 to insulate the conductors 18 from the walls of the stator core 14 that form the slots 16.

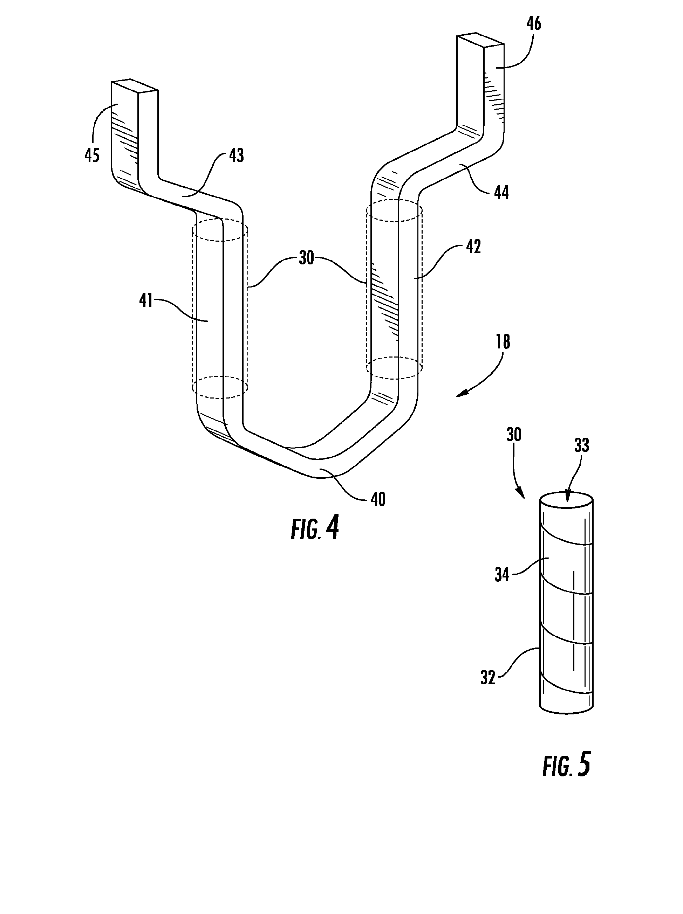

An exemplary U-shaped segmented conductor 18 of rectangular cross-section is shown in FIG. 4. The segmented conductor 18 includes two in-slot portions 41 and 42 connected by a U-turn portion 40. Each in-slot portion 41, 42 is joined to an associated connection end 43, 44. Tips 45, 46 are provided on each connection end 43, 44. Each tip 45, 46 is connected to the tip of another conductor such that the conductors together form the winding arrangement 12 on the stator 10. An exemplary winding arrangement is shown in US Patent No. 7,622,843, issued November 24, 2009, the contents of which are incorporated herein by reference.

The segmented conductors 18 are positioned in the slots 16 of the stator core 14 with the in-slot portions 41, 42 extending through slot liners 30 (shown in dotted lines in FIG. 4), which are also positioned in the stator core. The in-slot portions 41, 42 of a given conductor 18 are positioned in different slots 16 of the stator. The connection ends 43, 44 extend from the weld side 24 of the stator, opposite the U-turn portions 40. The tip 45, 46 of each conductor is directly connected to an adjacent tip on another conductor 18. The connection of the tips 45, 46 may be made in any number of ways such as welding, brazing, or other methods known in the art. By connecting the segmented conductors in this fashion, complete windings 12 are formed on the stator 10.

With reference now to FIGs. 4 and 5, each slot liner 30 is generally provided as a sleeve of insulation material that is configured to receive the in-slot portion 41 or 42 of a conductor 18, but does not cover the U-turn portion 40 or the tips 43, 46. Each slot liner 30 is generally comprised of a heat-resistant, and electrically insulating material such as, for example, polyimide, polyamide, polyester, polyamideimide, stretched polyethylene terephthalate film, or other insulation materials. In at least one embodiment, the slot liners 30 are provided from a relatively flexible and durable calendered paper, such as Nomex, or other flame resistant meta-aramid material.

The term "slot liner" as used herein refers to an insulating structure that is configured for insertion into a slot of a core member of the electric machine and defines a channel or other cavity configured to receive at least one conductor of a winding arrangement. However, the term slot liner is not limited to the exemplary embodiments disclosed herein. Thus, the slot liner 30 may be configured in any of various different forms and sizes. For example, as shown in FIG. 5, the slot liner 30 may be provided as an elongated sheet 34 of insulation material that is spiral wound to form an insulating tube 32 with an axial cavity 33 designed and dimensioned to receive one of the conductors 18 of the winding arrangement. In this embodiment, opposite sides of the elongated sheet 34 may overlap as the insulation material twists around the conductor 18. In other embodiments, the slot liner 30 may be comprised of a strip of insulation material that wraps around the conductor 18 such that opposing edges of the strip meet along an axial seam. These opposing edges may be loosely engaged, or adhered or otherwise joined together to form a tube configured to receive the conductor. However, in other embodiments, the opposing edges may be completely separated such that the tube is not complete but instead has an open axial edge such that the cavity is an open channel. Additionally, although the tube 32 in FIG. 5 is shown as a cylindrical tube with a circular cross-section, it will be recognized that slot liners 30 may be provided in other shapes and configurations, including square cross-sections. In various embodiments the slot liner 30 may be bonded to the conductor 18 or may be friction-fit on electric conductor. As used herein, the term "friction fit" means that the sleeve 32 is held in place on the conductor 18 as a result of its shape or close contact with the conductor, but is not bonded to the conductor. Furthermore, while the embodiments disclosed herein show the slot liners 30 as only receiving a single conductor 18, in other embodiments, the slot liners may be configured to receive a plurality of conductors 18.

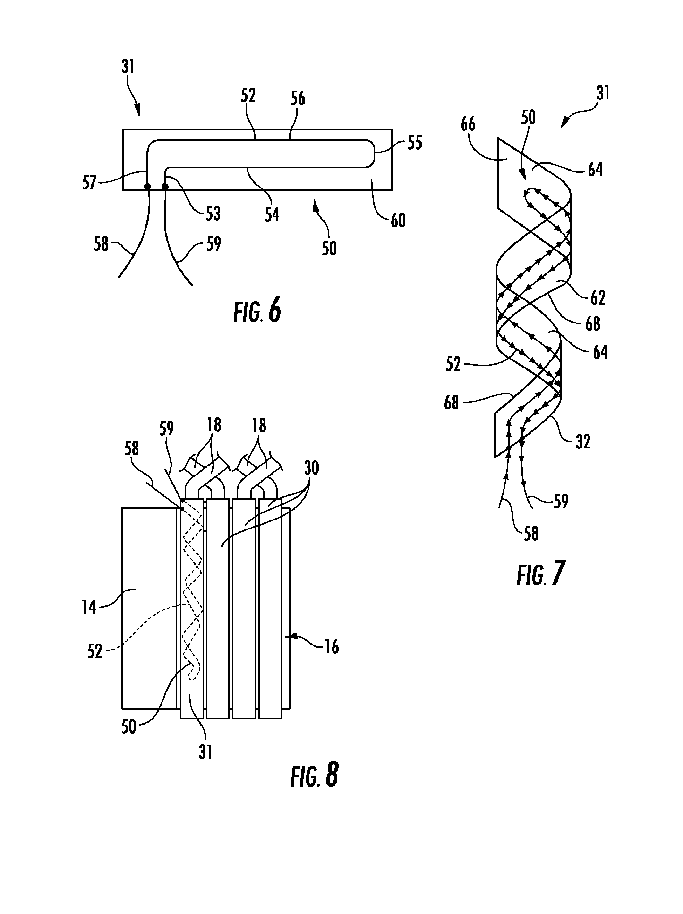

With reference now to FIGs. 3 and 6-8, a temperature sensor 50 is provided on at least one of the slot liners 30 in the slots 16 of the stator. As shown in FIGs. 3 and 8, the temperature sensor 50 is provided on the slot liner 31 which is positioned toward to outer edge 17 of the slot 16. As shown in FIGs. 3 and 6, the slot liner 31 is comprised of a substrate member 60 positioned between an outer insulation layer 62 and an inner insulation layer 64. In at least one embodiment the substrate member 60 is a thermoset strip, such as a strip of polyimide material. The first and second insulation layers 62, 64 may be comprised of a relatively durable calendered paper with electrically insulating properties, such as Nomex® or another flame resistant meta-aramid material.

The temperature sensor 50 is positioned on the substrate member 60 such that both the temperature sensor 50 and substrate member 60 are sandwiched between the first insulation layer 62 and second insulation layer 64. The temperature sensor 50 may be any of various types of temperature sensors. For example, the temperature sensor may be a resistance temperature detector (RTD), a thermistor, or a thermocouple, or other type of various other temperature sensors.

In the embodiment of FIGs. 3, 6 and 7, the temperature sensor 50 comprises a length of conductive material 52 connected to the substrate member 60. The length of conductive material has a resistance that predictably varies with temperature. The length of conductive material 52 generally has a consistent or linear thermal expansion to resistance ratio. Accordingly, as will be recognized by those of ordinary skill in the art a temperature at the temperature sensor 50 can be determined based on the electrical resistance provided by the length of conductive material 52.

Any of various types of material may be used for the length of conductive material 52 in the temperature sensor. For example, the length of conductive material 52 may be comprised of a metal material, such as platinum or other metals commonly used in RTDs. As another example, the length of conductive material 52 may be comprised of ceramic or polymer materials as are commonly used in thermistors.

In at least one embodiment, the slot liner 31 with the temperature sensor 50 is formed by first bonding the length of conductive material 52 to the substrate member 60. For example, the length of conductive material 52 may be printed on the substrate member as a thin film. As shown in FIG. 6, the substrate member 60 is an elongated strip of heat-resistant insulating material having a width that is substantially greater than the height. The length of conductive material 52 is printed on the substrate member 60 as a thin wire or film. The length of conductive material 52 includes a first end 53, a first straight segment 54, a U-turn segment 55, a second straight segment 56, and a second end 57. The various segments of the length of conductive material form a loop on the substrate member 60. In particular, in the embodiment of FIG. 6, a loop is provided by the substantially closed curve formed from the arrangement of the first end 53, the first straight segment 54, the U-turn segment 55, the second straight segment 56, and the second end 57.

Wire leads 58 and 59 are connected to the first end 53 and the second end 57 of the length of conductive material 52. The wire leads may be connected to the first end 53 and second end 57 of the length of conductive material 52 by welding, soldering, adhesive, or any of various other connection methods. The wire leads 58, 59 allow a voltage to be applied across the length of conductive material 52, thus allowing a resistance across the length of conductive material 52 to be determined.

After the wire leads 58, 59 are connected to the length of conductive material 52, the outer insulation layer 62 and inner insulation layer 64 are adhered or otherwise coupled to opposing sides of the substrate member 60. This provides a multi-layered strip where the substrate member 60 and the length of conductive material 52 are sandwiched between the outer insulation layer 62 and the inner insulation layer 64. Next, as illustrated in FIG. 7, the multi-layered strip 66 is spirally wound to form the tube 32. While FIG. 7 shows a stretched version of the tube 32, it will be appreciated that this is for illustration, and the edges 68 of the multi-layered strip 66 are actually connected to form the tube 32.

The numerous arrows in FIG. 7 illustrate the helical path for electrical current flowing through the length of conductive material 52. As shown in FIG. 7 the path provided by the length of conductive material 52 extends in a spiral fashion downward and then upward along the tube 32. Because the length of conductive material 52 is provided in a loop, the inductive effect of current flowing through the slot 16 is negated, as current through the length of conductive material flows in two opposing directions. While the winding path for the length of conductive material 52 is shown in FIG. 7 as being spiral, other types of winding paths are possible, including Ayrton-Perry windings, or any of various other appropriate winding paths as may be recognized by those of ordinary skill in the art.

FIG. 8 shows the slot liner 31 with a connected temperature sensor 50 positioned in one of the slots 16 of the stator along with three additional slot liners 30. In this embodiment, the winding arrangement is a multi-set winding arrangement with four layers of conductors 18 in each slot of the stator core 14. The three innermost layers of conductors 18 extend through slot liners 30 that do not include a temperature sensor 50. The outermost conductor extends through a slot liner 31 that does include a temperature sensor 50, as described above. The temperature sensor includes a length of conductive material 52 having a resistance that varies with temperature. Leads 58 and 59 are connected to the ends of the length of conductive material 52. These leads 58 and 59 are electrically connected to a controller or other circuitry configured to measure the resistance across the length of conductive material 52 and determine an associated temperature.

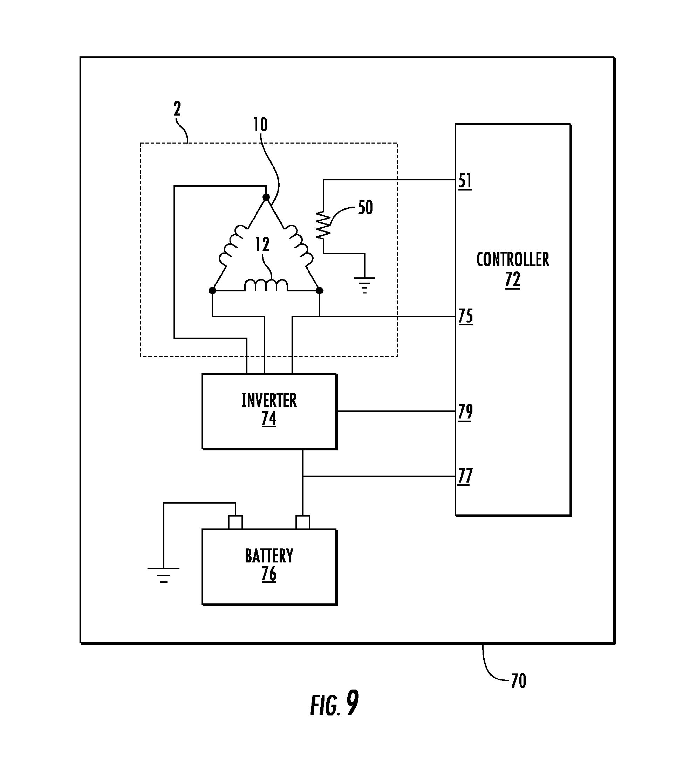

FIG. 9 shows an example of a controller 72 associated with an inverter 74 for use in a vehicle 70, such as a hybrid electric vehicle. The controller 72 is configured to receive various inputs, including input 75 from the inverter 74, input 77 from the battery, as well as other inputs as will be recognized by those of ordinary skill in the art. In addition, controller 72 is configured to receive input 51 from the temperature sensor 50 provided on the slot liner 31, as described above with reference to FIGs. 1-8. Based on the signal received from the temperature sensor 50, the controller 72 may deliver control signals to the inverter 74 at output 79, as well as other control signals to other components of the vehicle 70 in order to improve performance of the vehicle.

In view of the foregoing, a method of monitoring a temperature of an electric machine with a winding arrangement in an automotive vehicle is disclosed. The method includes inserting a slot liner 31 into a slot of a core 14 of the electric machine. The slot liner 31 includes a temperature sensor 50 connected to the slot liner 31 such that the temperature sensor 50 is at least partially positioned within the slot 16 of the stator core. The method further includes inserting at least one conductor 18 of the winding arrangement into the slot liner 31. In one embodiment of the method, the slot liner 31 is positioned in the slot 16 before the conductor 18 is inserted into the slot liner 31. In another embodiment of the method, the conductor 18 is inserted into the slot liner 31 before the conductor 18 and slot liner 31 is positioned in the slot.

In addition to the above, the method of monitoring a temperature of an electric machine may further include coupling the temperature sensor 50 on the slot liner 31 to a controller in a vehicle such as a hybrid electric vehicle. The controller is configured to send an electrical signal to the temperature sensor and determine the temperature based on a parameter of an electrical signal provided by the temperature sensor. This may include, for example, delivering a known current flow through the length of conductive material 52, determining a voltage drop across the length of conductive material 52 based on the known current, and then calculating the resistance of the length of conductive material based on the known voltage and current. As another example, this may include providing a known voltage across the length of conductive material 52, determining a current flow through the length of conductive material 52 based on the known voltage, and then calculating the resistance of the length of conductive material based on the known voltage and current. Accordingly, based on an electrical signal parameter provided by the length of conductive material, a resistance of the length of conductive material 52 can be determined. Because the length of conductive material has a resistance that varies with temperature, the temperature inside the electric machine may then be calculated based on the determined resistance.

According to a further embodiment of the above method, before the slot liner 31 is inserted into the slot of the core of the electric machine, the length of conductive material 52 having a resistance that varies with temperature is provided on a substrate member 60, as illustrated in FIG 6. The substrate member 60 and length of conductive material 52 are then covered with at least one insulation layer to form a multi-layer strip 66. The multi-layer strip 66 is then spiral wound, as illustrated in FIGs. 7 and 8, such that the slot liner is in the form a tube.

The foregoing detailed description of one or more embodiments of the slot liner with temperature sensor arrangement has been presented herein by way of example only and not limitation. It will be recognized that there are advantages to certain individual features and functions described herein that may be obtained without incorporating other features and functions described herein. Moreover, it will be recognized that various alternatives, modifications, variations, or improvements of the above-disclosed embodiments and other features and functions, or alternatives thereof, may be desirably combined into many other different embodiments, systems or applications. Presently unforeseen or unanticipated alternatives, modifications, variations, or improvements therein may be subsequently made by those skilled in the art which are also intended to be encompassed by the appended claims. Therefore, the spirit and scope of any appended claims should not be limited to the description of the embodiments contained herein.

## Claims

1. An electric machine comprising:
a core comprising a plurality of slots;
a plurality of conductors positioned in the plurality of slots;
at least one slot liner positioned in one of the plurality of slots; and
a temperature sensor provided on the slot liner.

2. The electric machine of claim 1 wherein the temperature sensor comprises a length of conductive material having a resistance that varies with temperature.

3. The electric machine of claim 2 wherein the temperature sensor is a resistance temperature detector (RTD) or a thermistor.

4. The electric machine of claim 3 wherein the RTD includes a length of metal bonded to the slot liner in a loop with two ends and metal leads extending from the slot liner at the two ends.

5. The electric machine of claim 4 wherein the length of metal extends along the slot liner in spiral fashion.

6. The electric machine of claim 5 wherein slot liner comprises a tube formed from a spiral wound thermoset strip.

7. The electric machine of claim 6 wherein the slot liner further comprises a first layer of insulation a first side of the thermoset strip and a second layer of insulation on a second side of the thermoset strip.

8. The electric machine of claim 1 wherein the temperature sensor is coupled to a vehicle controller.

9. A slot liner for insertion into a slot of a core of an electric machine including a winding arrangement having a plurality of conductors, the slot liner configured to receive at least one of the plurality of conductors, the slot liner comprising:
a first insulation layer forming a cavity configured to receive at least one of the plurality of conductors of the winding arrangement;
a second insulation layer coupled to the first insulation layer;
a length of conductive material positioned between the first insulation layer and the second insulation layer, the length of conductive material having a resistance that varies with temperature, the length of conductive material including a first end and a second end;
a first lead extending from the first end of the length of conductive material; and
a second lead extending from the second end of the length of conductive material.

10. A method of monitoring a temperature of an electric machine with a winding arrangement in a vehicle, the method comprising:
inserting a slot liner into a slot of a core of the electric machine, a temperature sensor provided on the slot liner such that the temperature sensor is at least partially positioned within the slot;
inserting at least one conductor of the winding arrangement into the slot liner;
coupling the temperature sensor to a vehicle controller; and
determining a temperature inside the electric machine based on an electrical signal parameter from the temperature sensor.
